# EUROPÄISCHE PATENTSCHRIFT

(11) **EP 3 156 139 B1**
(45) Veröffentlichungstag und Bekanntmachung des Hinweises auf die Patenterteilung: **27.09.2023**
(21) Anmeldenummer: 16192696.9
(22) Anmeldetag: 06.10.2016
(51) Int. Cl.: B08B 1/04, B08B 3/04, B60S 3/04, F16F 15/32, G01M 1/32

(54) **VERFAHREN ZUR REINIGUNG EINER BEFESTIGUNGSFLÄCHE FÜR EIN AUSGLEICHSELEMENT AN EINEM FAHRZEUGRAD**
METHOD FOR CLEANING A FASTENING SURFACE FOR A BALANCING ELEMENT ON A VEHICLE WHEEL
PROCÉDÉ DE NETTOYAGE D'UNE SURFACE DE FIXATION D'UN ÉLÉMENT D'ÉQUILIBRAGE SUR UNE ROUE DE VÉHICULE

(30) Priorität: 14.10.2015 DE 102015117458
(43) Veröffentlichungstag der Anmeldung: 19.04.2017
(73) Patentinhaber: Schenck RoTec GmbH, 64293 Darmstadt (DE)
(72) Erfinder: Peinelt, Andreas, 64319 Pfungstadt (DE); Zech, Jonas, 67150 Niederkirchen (DE)
(74) Vertreter: Haarpatent Patentanwälte Krämer Meyer

(56) Entgegenhaltungen:
- EP-A2- 0 684 464
- WO-A1-2009/012104
- US-A1- 2010 147 458

## Beschreibung

Die Erfindung betrifft ein Verfahren zur Reinigung einer Befestigungsfläche für ein Ausgleichselement auf einer Innenseite einer Felge eines Rads. Ferner betrifft die Erfindung eine Vorrichtung zur Durchführung des Verfahrens.

Es sind Verfahren und Vorrichtungen zur Anbringung von Ausgleichselementen an Fahrzeugrädern bekannt. Nach Montage des Fahrzeugrads wird in einer Unwuchtmessvorrichtung die Unwucht des Rads bestimmt. Um die gemessene Unwucht auszugleichen, wird in einer Ausgleichsstation mindestens ein Ausgleichselement an der Innenseite der Felge angebracht. Oftmals ist die Anbringung von mehreren Ausgleichselementen in unterschiedlichen Ausgleichsebenen notwendig. Das anzubringende Ausgleichselement wird in der Regel von einem Materialband abgetrennt, mit einem Befestigungsmittel, z. B. einem Doppelklebeband, beschichtet und an eine zuvor errechnete Position an der Felgeninnenseite geklebt.

Um eine dauerhafte Befestigung des Ausgleichselements sicherzustellen, muss vor dessen Anbringung die Fläche, an der das Ausgleichselement befestigt werden soll, gereinigt werden. Schon geringe Mengen Schmutz können die Haftbarkeit des Befestigungsmittels beeinflussen.

Aus EP 0 684 464 A2 und US 2010/147458 A1 sind Verfahren und Vorrichtungen zur Befestigung eines Ausgleichsgewichts an einer Felgenschüssel bekannt, die auch eine Reinigung der Felge durchführen können.

Es ist ferner bekannt, die Befestigungsfläche vor Anbringung des Ausgleichselements manuell zu reinigen, indem die Felgeninnenseite mit einem Reinigungstuch ausgewischt wird. Zusätzlich kann ein leicht flüchtiges Reinigungsmittel wie beispielsweise Isopropanol oder Spiritus verwendet werden, um die Reinigungswirkung zu verbessern.

Nachteilig hierbei ist jedoch, dass eine reproduzierbare Reinigung der Felgen nicht sichergestellt werden kann und auch die verwendete Menge an Reinigungsmittel stark variieren kann. Außerdem ist die bekannte Reinigungsart nicht in einen vollautomatischen Unwuchtausgleichsprozess integrierbar.

Der Erfindung liegt somit die Aufgabe zugrunde, eine automatisierbare Reinigung eines Bereichs einer Felge bereitzustellen.

Die Aufgabe wird erfindungsgemäß durch ein Verfahren mit den in Anspruch 1 angegebenen Merkmalen und durch eine Vorrichtung gemäß des Anspruchs 5 gelöst. Vorteilhafte Ausgestaltungen des Verfahrens und der Vorrichtung sind in den Unteransprüchen angegeben.

Die Aufgabe wird erfindungsgemäß dadurch gelöst, dass ein Verfahren zur Reinigung einer Befestigungsfläche für ein Ausgleichselement auf einer Innenseite einer Felge eines Fahrzeugrads bereitgestellt wird, bei welchem das Fahrzeugrad derart in einer Haltevorrichtung positioniert wird, dass eine Reinigungsvorrichtung mit Hilfe einer Handhabungsvorrichtung zu der Befestigungsfläche an der Innenseite der Felge des positionierten Fahrzeugrads bewegbar ist, wobei die Reinigungsvorrichtung an einem freien Ende der Handhabungsvorrichtung angeordnet ist und die Reinigungsvorrichtung von der Handhabungsvorrichtung zu einer mit einem Reinigungsmittel gefüllten Benetzungseinrichtung bewegt und in der Benetzungseinrichtung mit Reinigungsmittel benetzt wird, die mit Reinigungsmittel benetzte Reinigungsvorrichtung von der Handhabungsvorrichtung von unten in die Felge und an eine zu reinigende Befestigungsfläche bewegt wird, und die Reinigungsvorrichtung durch einen Motor in Rotation um ihre Achse versetzt wird und mindestens die eine Befestigungsfläche auf der Innenseite der Felge rotierend reinigt. Das erfindungsgemäße Verfahren ist automatisierbar und kann in eine Montagelinie integriert werden. Außerdem ist die Reinigung reproduzierbar und kann mit einer festgelegten Menge Reinigungsmittel erfolgen. Durch die erfindungsgemäße Reinigung der Befestigungsfläche wird zur Reinigung eine geringe Menge Reinigungsmittel verwendet, so dass auch sichergestellt ist, dass das Reinigungsmittel bis zur Anbringung des Ausgleichselements im Wesentlichen vollständig verdunstet. Hierdurch kann eine Beeinträchtigung des Befestigungsmittels durch das Reinigungsmittel nahezu ausgeschlossen werden.

Um die von der Reinigungsvorrichtung aufgenommene Menge an Reinigungsmittel möglichst gering zu halten, wird vorgeschlagen, dass eine Oberseite der Reinigungsvorrichtung in einen das Reinigungsmittel aufweisenden Benetzungsteller der Benetzungseinrichtung eingetaucht wird. Die Eintauchtiefe der Reinigungsvorrichtung kann festgelegt und gesteuert werden und in Abhängigkeit von dem verwendeten Reinigungsmittel, der Form der Reinigungsvorrichtung und der Anzahl der zu reinigenden Befestigungsflächen variiert werden. Durch die geringe Eintauchtiefe wird lediglich eine geringe Menge an Reinigungsmittel aufgenommen, wobei das Reinigungsmittel durch die Bewegung der Handhabungsvorrichtung in der Reinigungsvorrichtung verteilt wird, so dass schließlich eine effiziente Reinigung der Befestigungsfläche mit Reinigungsmittel sichergestellt ist.

Das erfindungsgemäße Verfahren kombiniert eine mechanische Reinigung mit einer chemischen Reinigung, was zu einer verbesserten und effizienteren Reinigung führt. Die mechanische Reinigung wird zudem noch dadurch unterstützt, dass die Reinigungsvorrichtung die Befestigungsfläche rotierend reinigt. Hierfür kann im Gehäuse der Handhabungsvorrichtung ein Antrieb vorgesehen sein, der mit der Reinigungsvorrichtung treibend verbunden ist. Als Antrieb kann ein Druckluftmotor oder ein Elektromotor verwendet werden. Die Rotation der Reinigungsvorrichtung kann zeitabhängig gesteuert sein, so dass die Reinigung der Befestigungsfläche bzw. die Rotation der Reinigungsvorrichtung für eine definierte Zeitdauer erfolgt und danach der Motor abschaltet.

Die Reinigungsvorrichtung kann mit Hilfe der Handhabungsvorrichtung in der Felge in drei Raumrichtungen bewegt werden, wobei nach dem Anfahren der Befestigungsfläche die eigentliche Reinigung in zwei Raumrichtungen erfolgt, so dass die Reinigungsvorrichtung insbesondere lateral zu der Innenseite der Felge bewegt wird.

In einer bevorzugten Ausgestaltung ist vorgesehen, dass die Handhabungsvorrichtung die Reinigungsvorrichtung nach der Reinigung einer ersten Befestigungsfläche zu einer zweiten zu reinigenden Befestigungsfläche bewegt. Durch einmaliges Einfahren der Reinigungsvorrichtung in den Innenraum der Felge können mehrere Befestigungsflächen gereinigt werden, ohne dass die Reinigungsvorrichtung zwischen den Reinigungen erneut zu der Benetzungseinrichtung gefahren werden muss. Hierdurch können mit geringem Zeitaufwand und in einem Arbeitsschritt mehrere Befestigungsflächen in einem Fahrzeugrad gereinigt werden.

In einem weiteren Aspekt betrifft die Erfindung eine Vorrichtung zur Durchführung des Verfahrens mit einer ein Fahrzeugrad haltenden Haltevorrichtung und einer Handhabungsvorrichtung, die an ihrem freien Ende eine rotierbare Reinigungsvorrichtung aufweist, die mit einer Antriebswelle eines Motor drehfest verbunden ist, der die Reinigungsvorrichtung um ihre Achse rotierend antreibt, wobei das Rad derart in der Haltevorrichtung positionierbar ist, dass mindestens eine zu reinigende Befestigungsfläche an einer Innenseite einer Felge des Rads für die durch die Handhabungsvorrichtung hierhin bewegbare Reinigungsvorrichtung von unten zugänglich ist und wobei eine ein Reinigungsmittel aufweisende Benetzungseinrichtung im Arbeitsbereich der Handhabungsvorrichtung angeordnet ist. Die erfindungsgemäße Vorrichtung kann durch die automatisch ausgeführte Reinigung der Befestigungsfläche als Reinigungsstation in eine Montagelinie integriert werden. Diese Reinigungsstation kann beispielsweise einer Unwuchtmessstation nachgeschaltet und der Ausgleichsstation vorgeschaltet sein. Außerdem können auch mehrere Befestigungsflächen in einem Arbeitsschritt gereinigt werden. Insbesondere durch die Kombination einer mechanischen und chemischen Reinigung kann eine schnelle und vor allem effiziente Reinigung der Befestigungsfläche erreicht werden, was wiederum eine sichere und dauerhafte Befestigung des Ausgleichselements ermöglicht.

Um die Reinigungsvorrichtung in allen drei Raumrichtungen beweglich zu gestalten, wird vorgeschlagen, dass die Handhabungsvorrichtung als ein in drei Richtungen bewegbarer Gelenkarm ausgestaltet ist. Hierdurch ist es auch möglich, dass die Reinigungsvorrichtung im Inneren der Felge in drei Raumrichtungen bewegt wird und die Befestigungsfläche in zwei Raumrichtungen gereinigt wird.

Vorteilhafterweise ist die Reinigungsvorrichtung relativ zum Gelenkarm der Handhabungsvorrichtung um wenigstens eine Achse bewegbar. Hierdurch ist eine genaue Steuerung der Reinigungsvorrichtung in der Felge möglich. Zudem ist die Bewegungsfreiheit der Reinigungsvorrichtung relativ zu dem Gelenkarm verbessert.

Die Reinigungsvorrichtung ist vorteilhafterweise durch einen an der Handhabungsvorrichtung angeordneten Motor in Rotation bringbar. Der Motor kann in dem Gehäuse der Handhabungsvorrichtung untergebracht sein.

Die Handhabungsvorrichtung kann unterschiedlich gesteuert sein. So kann es beispielsweise vorteilhaft sein, dass an der Handhabungsvorrichtung ein Sensor zur Erfassung von Markierungen an dem Rad angeordnet ist. Eine Befestigungsfläche, an die ein Ausgleichselement angebracht werden soll, kann zuvor markiert, und von dem Sensor der Handhabungsvorrichtung erfasst und zur Ansteuerung der Handhabungsvorrichtung verwendet werden. Beispielsweise kann die Befestigungsfläche mit einer Marke, die mithilfe eines magnetischen Dipols in der Unwuchtmessstation gesetzt wird, über einen an der Handhabungsvorrichtung vorhandenen Magnetfeldsensor detektiert werden. Die Bewegungen der Handhabungsvorrichtung können mittels einer programmierbaren Servosteuerung, beispielsweise einer CNC-Steuerung, gesteuert werden, so dass durch die Eingabe anwendungsspezifischer Daten und Programme die jeweilige Einrichtung der Handhabungsvorrichtung auf die vorgesehene Anwendung auf einfache Weise erfolgen kann. Die Steuereinrichtung der Handhabungsvorrichtung kann die Position der zu reinigenden Befestigungsfläche von der Unwuchtmessstation erhalten und dementsprechend die Handhabungsvorrichtung steuern.

Es wird ferner vorgeschlagen, dass die Benetzungseinrichtung einen das Reinigungsmittel aufweisenden Benetzungsteller umfasst, dessen Durchmesser an den Durchmesser der Reinigungsvorrichtung angepasst ist, so dass eine Oberseite der Reinigungsvorrichtung vollständig zur Auflage in den Benetzungsteller bringbar ist. Ferner kann die Tiefe des Benetzungsteller derart angepasst werden, dass lediglich ein definierter Bereich der Reinigungsvorrichtung in den Benetzungsteller eintaucht. Selbstverständlich ist es ferner möglich, die Eintauchtiefe über die Steuereinrichtung der Handhabungsvorrichtung zu steuern.

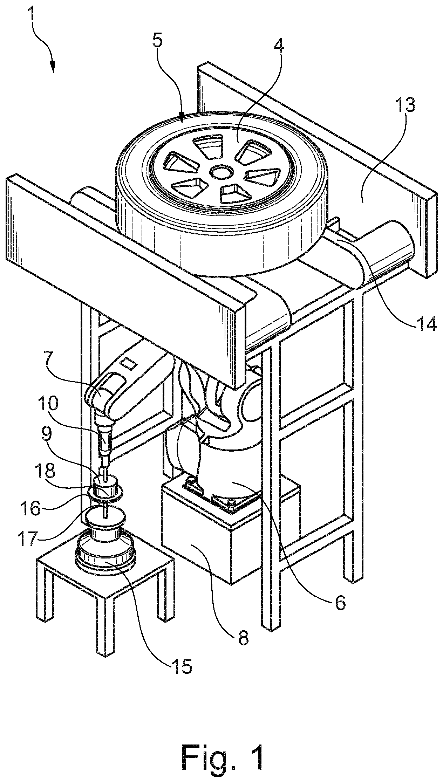

Die Erfindung wird nachfolgend anhand eines Ausführungsbeispiels der Erfindung näher erläutert, das in der Zeichnung dargestellt ist. Es zeigen
- Figur 1: eine perspektivische Ansicht einer bevorzugten Vorrichtung mit einer Reinigungsvorrichtung an der Benetzungseinrichtung,

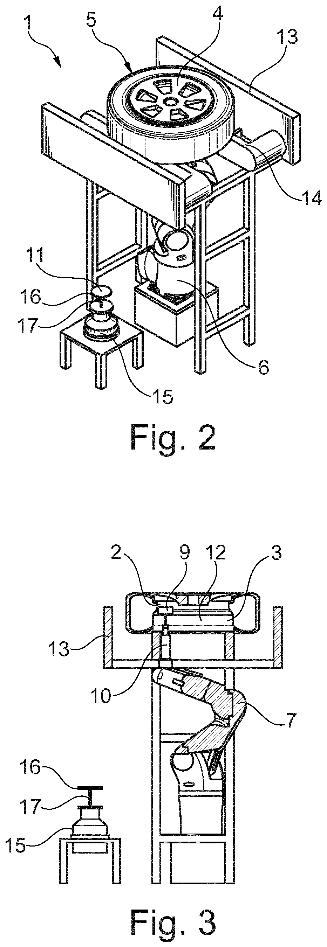

- Figur 2: eine perspektivische Ansicht der bevorzugten Vorrichtung mit der Reinigungsvorrichtung in einer Felge und
- Figur 3: eine Seitenansicht der Vorrichtung gemäß Figur 2, teilweise im Querschnitt.

Es ist eine Vorrichtung 1 zur Reinigung einer Befestigungsfläche 2 für ein Ausgleichselement auf einer Innenseite 3 einer Felge 4 eines Rads 5 dargestellt, die für ein zuvor beschriebenes Verfahren verwendbar ist. Bei der Handhabungsvorrichtung 6 handelt es sich um einen Industrieroboter, mit einem mehrere Bewegungsachsen aufweisenden Gelenkarm 7, durch den die Handhabungsvorrichtung 6 in drei Raumrichtungen bewegbar ist. Der Gelenkarm 7 weist mehrere Gelenke auf. Die Handhabungsvorrichtung 6 kann stationär auf einem Standfuß 8 positioniert sein. Jedoch ist auch eine mobile Positionierung der Handhabungsvorrichtung 6 möglich, bei dem die Handhabungsvorrichtung 6 auf einem auf Schienen verschiebbaren Standfuß angeordnet ist.

An ihrem freien Ende weist die Handhabungsvorrichtung 6 eine Reinigungsvorrichtung 9 auf, die als Bürste ausgestaltet und drehfest mit einer Antriebswelle eines Motors 10 verbunden ist. Die Reinigungsvorrichtung 9 hat eine zylindrische Form und weist einen der Krümmung der Felgeninnenseite 3 angepassten Durchmesser auf. Die Reinigungsvorrichtung 9 kann beispielsweise über eine Steck- oder Schnappverbindung treibend mit dem Motor 10 verbunden sein und kann einfach ausgewechselt werden. Somit kann die Reinigungsvorrichtung 9 einfach an unterschiedliche zu reinigende Oberflächen angepasst werden. Als Material für die Reinigungsvorrichtung 9 eignet sich ein hydrophiles Kunststoffmaterial, das ein Reinigungsmittel 11 gut aufnimmt und die Oberfläche der Felge 4 nicht beschädigt.

Die Reinigungsvorrichtung 9 wird durch den im Gehäuse der Handhabungsvorrichtung 6 angeordneten Motor 10 angetrieben und in Rotation versetzt. Der Motor 10 kann zum Beispiel ein Druckluftmotor sein, der die Reinigungsvorrichtung 9 leistungsstark antreibt und gegenüber dem verwendeten Reinigungsmittel 11 unempfindlich ist. Als Druckluftmotoren kommen insbesondere ein Druckluftlamellenmotor oder ein Zahnradmotor in Frage. Selbstverständlich kann die Reinigungsvorrichtung 9 auch mittels einem Elektromotor angetrieben werden.

Um die Handhabungsvorrichtung 6 genau zu steuern, können mehrere unabhängige Antriebe verwendet werden, die durch eine programmierbare Steuereinrichtung steuerbar sind und eine positionsgenaue Bewegung der Handhabungsvorrichtung 6 ermöglichen. Außerdem kann die Reinigungsvorrichtung 9 relativ zum Gelenkarm 7 der Handhabungsvorrichtung 6 um wenigstens eine Achse bewegbar sein. Hierdurch ist mitunter eine präzise Bewegung der Reinigungsvorrichtung 9 in der Felge 4 beziehungsweise einer Felgenschüssel 12 der Felge 4 möglich.

Im Arbeitsbereich der Handhabungsvorrichtung 6 ist eine Haltevorrichtung 13 angeordnet, die der Zuführung und Positionierung von montierten Fahrzeugrädern 5 dient, bei denen ein Ausgleich einer festgestellten Unwucht erfolgen soll. Die Haltevorrichtung 13 umfasst eine in der Zeichnung angedeutete Transportvorrichtung 14, mit deren Hilfe das Fahrzeugrad 5 in eine Position oberhalb der Handhabungsvorrichtung 6 befördert wird. Hierbei liegt das Fahrzeugrad 5 so auf der Transportvorrichtung 14 beziehungsweise der Haltevorrichtung 13, dass die Felge 4 zu der Handhabungsvorrichtung 6 hin orientiert und für diese zugänglich ist. Die Haltevorrichtung 13 kann auch in einer anderen Orientierung zu der Handhabungsvorrichtung 6 ausgerichtet sein, als in der Zeichnung dargestellt, wobei lediglich entscheidend ist, dass die Felge 4, insbesondere die Felgeninnenseite 3 der Felge 4, für die Handhabungsvorrichtung 6 zugänglich ist und die Reinigungsvorrichtung 9 in diese bewegt werden kann.

Weiterhin befindet sich eine Benetzungseinrichtung 15 im Arbeitsbereich der Handhabungsvorrichtung 6. Die Benetzungseinrichtung 15 umfasst eine als Benetzungsteller 16 ausgestaltete Wanne. Durch eine Zuführleitung 17 im Zentrum des Benetzungstellers 16 wird mittels einer unterhalb des Benetzungstellers 16 angeordneten Pumpe flüssiges Reinigungsmittel 11 in den Benetzungsteller 16 befördert. Das Reinigungsmittel 11 kann beispielsweise Isopropanol oder Spiritus sein. Diesbezüglich kann es vorteilhaft sein, wenn das Reinigungsmittel 11 einen Haftvermittler umfasst, der die nachfolgende Anbringung des Ausgleichselements durch das Befestigungsmittel unterstützt. Der Haftvermittler kann dem Reinigungsmittel 11 in flüssiger oder fester Form beigemischt werden, wobei nach der Reinigung der Befestigungsfläche 4 das leicht flüchtige Reinigungsmittel 11 verdunstet und lediglich der Haftvermittler an der Befestigungsfläche 4 zurückbleibt.

Nachdem das Fahrzeugrad 5 montiert ist, wird die Unwucht des Rads 5 in einer Unwuchtmessstation gemessen. Die erfindungsgemäße Vorrichtung 1 kann als Reinigungsstation Bestandteil einer Montagelinie sein. Bevor ein oder mehrere Ausgleichselemente zum Ausgleich der Unwucht an dem Rad 5 befestigt werden, wird die jeweilige Befestigungsfläche 2 gereinigt. Hierfür gelangt das Fahrzeugrad 5 über die Transportvorrichtung 14, beispielsweise ein Förderband, von der Unwuchtmessstation zu der Haltevorrichtung 13. Ein Sensor in Form einer Lichtschranke erkennt, wann das Rad 5 in die Haltevorrichtung 13 einfährt. Mit Hilfe eines Servomotors wird das Rad 5 derart in der Haltevorrichtung 13 positioniert, dass das Innere der Felge 4 für die Reinigungsvorrichtung 9 zugänglich ist und die Reinigungsvorrichtung 9 einen oder mehrere Bereiche der Felgeninnenseite 3 reinigen kann.

Während der Positionierung des Rads 5 kann die Reinigungsvorrichtung 9 von der Handhabungsvorrichtung 6 zu der Benetzungseinrichtung 15 bewegt werden. Die Reinigungsvorrichtung 9 wird mit einer Oberseite 18 in den Benetzungsteller 16 bewegt, so dass mindestens ein Bereich der Reinigungsvorrichtung 9 mit dem Reinigungsmittel 11 in Kontakt gebracht wird. Dadurch, dass die Reinigungsvorrichtung 9 anschließend von dem Gelenkarm 7 der Handhabungsvorrichtung 6 bewegt und beispielsweise um 180° gedreht wird, verteilt sich das Reinigungsmittel 11 in der Reinigungsvorrichtung 9.

Die Handhabungsvorrichtung 6 bewegt nun die Reinigungsvorrichtung 9 in Richtung der Felge 4, beziehungsweise der Felgenschüssel 12 und in diese hinein, bis an die Befestigungsfläche 2, an der in der nachfolgenden Ausgleichsstation ein Ausgleichselement angeklebt werden soll. Das in der Haltevorrichtung 13 angeordnete Fahrzeugrad 5 wird durch den Servomotor der Haltevorrichtung 13 in eine definierte Position gebracht, wobei die Handhabungsvorrichtung 6 von der Steuereinrichtung an die zu reinigenden Befestigungsflächen 2 bewegt wird. Die exakte Position der Befestigungsfläche 2 wird zuvor in der Unwuchtmessstation bestimmt und kann somit nachfolgend zur Steuerung der Handhabungsvorrichtung 6 genutzt werden. Die Reinigungsvorrichtung 9 wird von unten in das Innere der Felge 4 gefahren und an die Befestigungsfläche 2 bewegt. Durch den Motor 10 kann die Reinigungsvorrichtung 9 in Rotation versetzt werden. Die Reinigungsvorrichtung 9 wird tangential zur Felgeninnenseite 3 ausgerichtet. Um die Befestigungsfläche 2 großflächig zu reinigen, kann die Reinigungsvorrichtung 9 durch die Handhabungsvorrichtung 6 lateral zur Felgeninnenseite 3 bewegt werden, wobei eine zweidimensionale Bewegung der Reinigungsvorrichtung 9 während der eigentlichen Reinigung möglich ist, die auch dadurch erreicht wird, dass die Reinigungsvorrichtung 9 relativ zum Gelenkarm 7 der Handhabungsvorrichtung 6 um wenigstens eine Achse bewegbar ist.

Die Befestigungsfläche 2 kann durch die Reinigungsvorrichtung 9 effizient gereinigt werden. Die Reinigung erfolgt mechanisch durch die Rotation der Reinigungsvorrichtung 9 und chemisch durch das Reinigungsmittel 11. Dadurch, dass ein leicht flüchtiges Reinigungsmittel 11 verwendet wird, verdunstet das Reinigungsmittel 11 schnell und hat keine nachteilige Wirkung auf den Befestigungsprozess des Ausgleichselements.

Falls ein zweites Ausgleichselement an das Rad anzubringen ist, kann die Reinigungsvorrichtung 9 direkt nach Beendigung der Reinigung einer ersten Befestigungsfläche 2 von der Handhabungsvorrichtung 6 zu einer weiteren Befestigungsfläche 2 bewegt werden, ohne dass die Reinigungsvorrichtung 9 zwischenzeitlich erneut mit Reinigungsmittel 11 benetzt werden müsste. Hierdurch können mehrere Befestigungsflächen 2 in einem Arbeitsgang gereinigt werden, was eine erhebliche Zeitersparnis mit sich bringt.

## Patentansprüche

1. Verfahren zur Reinigung einer Befestigungsfläche (2) für ein Ausgleichselement auf einer Innenseite (3) einer Felge (4) eines Fahrzeugrads (5), bei welchem das Fahrzeugrad (5) derart in einer Haltevorrichtung (13) positioniert wird, dass eine Reinigungsvorrichtung (9) mit Hilfe einer Handhabungsvorrichtung (6) zu der Befestigungsfläche (2) an der Innenseite der Felge (4) des positionierten Fahrzeugrads (5) bewegbar ist, wobei die Reinigungsvorrichtung (9) an einem freien Ende der Handhabungsvorrichtung (6) angeordnet ist und die Reinigungsvorrichtung (9) von der Handhabungsvorrichtung (6) zu einer mit einem Reinigungsmittel (11) gefüllten Benetzungseinrichtung (15) bewegt und in der Benetzungseinrichtung (15) mit Reinigungsmittel (11) benetzt wird, die mit Reinigungsmittel (11) benetzte Reinigungsvorrichtung (9) von der Handhabungsvorrichtung (6) von unten in die Felge (4) und an eine zu reinigende Befestigungsfläche (2) bewegt wird, die Reinigungsvorrichtung (9) durch einen Motor (10) in Rotation um ihre Achse versetzt wird und mindestens die eine Befestigungsfläche (2) auf der Innenseite (3) der Felge (4) rotierend reinigt.

2. Verfahren nach Anspruch 1, **dadurch gekennzeichnet, dass** eine Oberseite (18) der Reinigungsvorrichtung (9) in einen das Reinigungsmittel (11) aufweisenden Benetzungsteller (16) der Benetzungseinrichtung (15) eingetaucht wird.

3. Verfahren nach Anspruch 1 oder 2, **dadurch gekennzeichnet, dass** die Reinigungsvorrichtung (9) lateral zu der Innenseite (3) der Felge (4) bewegt wird.

4. Verfahren nach einem der vorhergehenden Ansprüche, **dadurch gekennzeichnet, dass** die Handhabungsvorrichtung (6) die Reinigungsvorrichtung (9) nach der Reinigung einer ersten Befestigungsfläche (2) zu einer zweiten zu reinigenden Befestigungsfläche (2) bewegt.

5. Vorrichtung zur Durchführung des Verfahrens nach einem der Ansprüche 1 bis 4, mit einer ein Fahrzeugrad (5) haltenden Haltevorrichtung (13) und einer Handhabungsvorrichtung (6), die an ihrem freien Ende eine rotierbare Reinigungsvorrichtung (9) aufweist, die mit einer Antriebswelle eines Motor (10) drehfest verbunden ist, der die Reinigungsvorrichtung (9) um ihre Achse rotierend antreibt, wobei das Rad (5) derart in der Haltevorrichtung (13) positionierbar ist, dass mindestens eine zu reinigende Befestigungsfläche (2) an einer Innenseite (3) einer Felge (4) des Fahrzeugrads (5) für die durch die Handhabungsvorrichtung (6) hierhin bewegbare Reinigungsvorrichtung (9) von unten zugänglich ist und wobei eine ein Reinigungsmittel (11) aufweisende Benetzungseinrichtung (15) im Arbeitsbereich der Handhabungsvorrichtung (6) angeordnet ist.

6. Vorrichtung nach Anspruch 5, **dadurch gekennzeichnet, dass** die Handhabungsvorrichtung (6) als ein in drei Richtungen bewegbarer Gelenkarm (7) ausgestaltet ist.

7. Vorrichtung nach Anspruch 6, **dadurch gekennzeichnet, dass** die Reinigungsvorrichtung (9) relativ zum Gelenkarm (7) der Handhabungsvorrichtung (6) um wenigstens eine Achse bewegbar ist.

8. Vorrichtung nach einem der vorhergehenden Ansprüche, **dadurch gekennzeichnet, dass** die Reinigungsvorrichtung (9) durch einen an der Handhabungsvorrichtung (6) angeordneten Motor (10) in Rotation bringbar ist.

9. Vorrichtung nach einem der vorhergehenden Ansprüche, **dadurch gekennzeichnet, dass** an der Handhabungsvorrichtung (6) ein Sensor zur Erfassung von Markierungen an dem Rad (5) angeordnet ist.

10. Vorrichtung nach einem der vorhergehenden Ansprüche, **dadurch gekennzeichnet, dass** die Benetzungseinrichtung (15) einen das Reinigungsmittel (11) aufweisenden Benetzungsteller (16) umfasst, dessen Durchmesser an den Durchmesser der Reinigungsvorrichtung (9) angepasst ist, so dass eine Oberseite (18) der Reinigungsvorrichtung (9) vollständig zur Auflage in den Benetzungsteller (16) bringbar ist.

## Claims

1. Method for cleaning a fastening surface (2) for a balancing element on an inner face (3) of a rim (4) of a vehicle wheel (5), in which method the vehicle wheel (5) is positioned in a holding apparatus (13) such that a cleaning apparatus (9) can be moved, by means of a handling apparatus (6), to the fastening surface (2) on the inner face of the rim (4) of the positioned vehicle wheel (5), wherein the cleaning apparatus (9) is arranged at a free end of the handling apparatus (6) and the cleaning apparatus (9) is moved by the handling apparatus (6) to a wetting device (15) filled with a cleaning agent (11) and is wetted with cleaning agent (11) in the wetting device (15), the cleaning apparatus (9) wetted with cleaning agent (11) is moved by the handling apparatus (6) from below into the wheel rim (4) and to a fastening surface (2) to be cleaned, the cleaning apparatus (9) is set in rotation around its axis by a motor (10) and cleans the at least one fastening surface (2) on the inner face (3) of the wheel rim (4) rotatably.

2. Method according to claim 1, **characterised in that** an upper face (18) of the cleaning apparatus (9) is immersed in a wetting plate (16) of the wetting device (15) that comprises the cleaning agent (11).

3. Method according to either claim 1 or claim 2, **characterised in that** the cleaning apparatus (9) is moved laterally to the inner face (3) of the wheel rim (4).

4. Method according to any of the preceding claims, **characterised in that**, after a first fastening surface (2) has been cleaned, the handling apparatus (6) moves the cleaning apparatus (9) to a second fastening surface (2) to be cleaned.

5. Apparatus for carrying out the method according to any of claims 1 to 4, comprising a holding apparatus (13) which holds a vehicle wheel (5), and a handling apparatus (6) which comprises a rotatable cleaning apparatus (9) at its free end, which is drivingly connected to a drive shaft of a motor (10), that sets the cleaning apparatus (9) in rotation around its axis, wherein the wheel (5) can be positioned in the holding apparatus (13) such that at least one fastening surface (2) to be cleaned on an inner face (3) of a rim (4) of the vehicle wheel (5) is accessible to the cleaning apparatus (9) from below, which can be moved thereto by means of the handling apparatus (6) and wherein a wetting device (15) which comprises a cleaning agent (11) is arranged in the working region of the handling apparatus (6).

6. Apparatus according to claim 5, **characterised in that** the handling apparatus (6) is designed as an articulated arm (7) that can be moved in three directions.

7. Apparatus according to claim 6, **characterised in that** the cleaning apparatus (9) is movable relative to the articulated arm (7) of the handling apparatus (6) about at least one axis.

8. Apparatus according to any of the preceding claims, **characterised in that** the cleaning apparatus (9) can be set in rotation by a motor (10) arranged on the handling apparatus (6).

9. Apparatus according to any of the preceding claims, **characterised in that** a sensor for detecting markings on the wheel (5) is arranged on the handling apparatus (6).

10. Apparatus according to any of the preceding claims, **characterised in that** the wetting device (15) includes a wetting plate (16) that comprises the cleaning agent (11), the diameter of which is adapted to the diameter of the cleaning apparatus (9) such that an upper face (18) of the cleaning apparatus (9) can be placed completely into the wetting plate (16).

## Revendications

1. Procédé pour nettoyer une surface de fixation (2) pour un élément de compensation sur une face intérieure (3) d'une jante (4) d'une roue de véhicule (5), dans lequel la roue de véhicule (5) est positionnée dans un dispositif de maintien (13) de telle sorte qu'un dispositif de nettoyage (9) peut être déplacé à l'aide d'un dispositif de manutention (6) vers la surface de fixation (2) sur la face intérieure de la jante (4) de la roue de véhicule (5) positionnée, le dispositif de nettoyage (9) étant disposé à une extrémité libre du dispositif de manutention (6), et le dispositif de nettoyage (9) étant déplacé par le dispositif de manutention (6) vers un dispositif de mouillage (15) rempli d'un produit de nettoyage (11) et étant mouillé avec le produit de nettoyage (11) dans le dispositif de mouillage (15), le dispositif de nettoyage (9) mouillé avec le produit de nettoyage (11) est déplacé par le dispositif de manutention (6) par le bas dans la jante (4) et contre une surface de fixation (2) à nettoyer, le dispositif de nettoyage (9) est mis en rotation autour de son axe par un moteur (10) et nettoie en rotation au moins ladite une surface de fixation (2) sur la face intérieure (3) de la jante (4).

2. Procédé selon la revendication 1, **caractérisé en ce qu'**une face supérieure (18) du dispositif de nettoyage (9) est immergée dans une coupelle de mouillage (16) du dispositif de mouillage (15) qui présente le produit de nettoyage (11).

3. Procédé selon la revendication 1 ou 2, **caractérisé en ce que** le dispositif de nettoyage (9) est déplacé latéralement par rapport à la face intérieure (3) de la jante (4).

4. Procédé selon l'une des revendications précédentes, **caractérisé en ce que** le dispositif de manutention (6) déplace le dispositif de nettoyage (9) vers une deuxième surface de fixation (2) à nettoyer après le nettoyage d'une première surface de fixation (2).

5. Dispositif pour la mise en oeuvre du procédé selon l'une des revendications 1 à 4, comprenant un dispositif de maintien (13) supportant une roue de véhicule (5) et un dispositif de manutention (6) muni à son extrémité libre d'un dispositif de nettoyage rotatif (9) relié bloqué en rotation à un arbre d'entraînement d'un moteur (10) entraînant en rotation le dispositif de nettoyage (9) autour de son axe, la roue (5) pouvant être positionnée dans le dispositif de maintien (13) de telle sorte qu'au moins une surface de fixation (2) à nettoyer sur une face intérieure (3) d'une jante (4) de la roue de véhicule (5) soit accessible par le bas pour le dispositif de nettoyage (9) pouvant y être déplacé par le dispositif de manutention (6), et un dispositif de mouillage (15) présentant un produit de nettoyage (11) étant disposé dans la zone de travail du dispositif de manutention (6).

6. Dispositif selon la revendication 5, **caractérisé en ce que** le dispositif de manutention (6) est conçu comme un bras articulé (7) mobile dans trois directions.

7. Dispositif selon la revendication 6, **caractérisé en ce que** le dispositif de nettoyage (9) est mobile autour d'au moins un axe par rapport au bras articulé (7) du dispositif de manutention (6).

8. Dispositif selon l'une des revendications précédentes, **caractérisé en ce que** le dispositif de nettoyage (9) peut être mis en rotation par un moteur (10) disposé sur le dispositif de manutention (6).

9. Dispositif selon l'une des revendications précédentes, **caractérisé en ce qu'**un capteur est disposé sur le dispositif de manutention (6) pour détecter des marquages sur la roue (5).

10. Dispositif selon l'une des revendications précédentes, **caractérisé en ce que** le dispositif de mouillage (15) comprend une coupelle de mouillage (16) présentant le produit de nettoyage (11) et dont le diamètre est adapté au diamètre du dispositif de nettoyage (9) de sorte qu'une face supérieure (18) du dispositif de nettoyage (9) peut être amenée entièrement en appui dans la coupelle de mouillage (16).
